# EUROPEAN PATENT APPLICATION

(11) **EP 2 293 310 A1**
(43) Date of publication of application: **09.03.2011**
(21) Application number: 10168597.2
(22) Date of filing: 06.07.2010
(51) Int. Cl.: H01F 27/32

(54) **Barrier layer with corrugated insulating layers**

(71) Applicant: ABB Technology AG, 8050 Zürich (CH)
(72) Inventor: Hajek, Jan, 771 31 Ludvika (SE); Vennerberg, Lars-Erik, 771 42 Ludvika (SE); Håkman, Leif, 57291 Oskarshamn (SE); Brattberg, Torbjörn, 57263 Oskarshamn (SE)
(74) Representative: Ahrengart, Kenneth

(57) **Abstract**

A barrier layer for a liquid filled electrical machine, the barrier comprising a plurality insulating layers, and the barrier layer comprises a first and a second corrugated insulating layer (4), the first corrugated insulating layer comprises ridges and valleys extending in a first direction and the second corrugated insulating layer comprises ridges and valleys extending in a second direction which differs from the first direction

## Description

### FIELD OF THE INVENTION

The present invention relates to barriers in liquid filled electrical induction machines such as transformers. The main function of the barriers is to electrically separate high voltage and earthed parts or high voltage and low voltage windings.

### BACKGROUND OF THE INVENTION

When transformer designs are optimized for maximum compactness ability of the liquid filled space, between the windings or the liquid filled space between windings and earthed parts, to accept a high dielectric stress becomes vital. The addition of cellulose barrier is known to increase the ability of the liquid, such as oil, to withstand high dielectric stress.

Typically transformers are stressed electrically with a high impulse electric field in testing, which is often dimensioning for the transformer and the barrier between the windings. A breakdown may be initiated in the wedge between two adjacent turns of a winding in a power transformer, an area often exposed to locally strong electrical fields especially when the winding is submitted to impulse voltages.

When a partial breakdown of the oil occurs, this might enable a streamer (spark) to propagate via the oil from one coil to the other or from one coil to the earthed container and this can cause serious damages to the transformer and a barrier might prevent this.

An electrical machine like a power transformer needs to be dimensioned to withstand electrical field strength being several times stronger than normal workload.

The use of cellulose insulating layers submerged in oil is known to increase the ability of the liquid to withstand high dielectric stress or the propagation of streamers.

The cellulose insulating layers form a barrier. The layer normally comprises a flat cellulose layer e.g. paper. The layers can be separated by spacers that create oil filled channels between the cellulose layers that further increase the barrier's ability to withstand electrical stress.

The handling and the assembly of the flat cellulose layer that build up the barriers for large transformers is problematic and labor intensive. The size of the flat cellulose layer can be several tens of square meters for large transformers and placing them around a coil, without bending or folding the cellulose layer, is a complex procedure. Folds and wrinkles in flat cellulose layer may lead to lower ability to withstand electrical fields. Placing spacers and holding them in place makes the manufacture of the barriers labor intensive and slow. Possible displacement of spacers may lead to deformation of channels and lower ability to withstand electrical fields.

### SUMMARY OF THE INVENTION

One object of the present invention is to provide a barrier layer for a liquid filled electrical machine that is easy to assemble or manufacture.

This object is achieved by the barrier layer for a liquid filled electrical machine as defined in claim 1.

One embodiment of the invention is a barrier layer for a liquid filled electrical machine, the barrier comprising a plurality insulating layers where the barrier layer comprises a first and a second corrugated insulating layer (4), the first corrugated insulating layer comprises ridges and valleys extending in a first direction and the second corrugated insulating layer comprises ridges and valleys extending in a second direction which differs from the first direction

According to an embodiment of the invention, the first and second corrugated insulating layer are cylindrically shaped and arranged coaxially. The corrugated insulating layers start as generally flat and rectangular sheets. Then, two sides of the rectangle are brought together to produce the cylindrical shape of the first layer. The cylinder is placed inside or outside of the coil. Then, two sides of another rectangle are brought together to produce the cylindrical shape of the second layer. The second layer is placed next to the first layer i.e. inside of the first layer if the first layer was placed inside of the coil and outside of the first layer if the first layer was placed outside of the coil. The first and second layers are arranged coaxially.

According to an embodiment of the invention, the angle between each of the first and the second direction and the axial direction of the layers is between 2 and 25 deg. The first and the second direction, points to different sides of the axial direction.

According to an embodiment of the invention, the absolute value of angle between the first direction and the axial direction is equal or similar (within two degrees) to the angle between the second direction and the axial direction.

According to an embodiment of the invention, a non-corrugated insulating sheet (3) is arranged between the first and second corrugated insulating layer (4).

According to an embodiment of the invention, the angle between the first and second direction is between 4 deg and 50 deg.

According to an embodiment of the invention, the first and second corrugated insulating layers (4) are made from non-cellulose fiber material.

According to an embodiment of the invention, the first and second corrugated insulating layers (4) are made from NOMEX.

According to an embodiment of the invention, the first and second corrugated insulating layers (4) are made from pressboard.

According to an embodiment of the invention, the ridges and valleys of the first layer are in contact with a neighboring insulating layer (4, 3).

According to an embodiment of the invention, the ridges and valleys of the first layer are in contact with a non-corrugated insulating layer (3).

According to an embodiment of the invention, the ridges and valleys of the first layer are in contact with ridges and valleys of the second layer (4).

According to an embodiment of the invention, a liquid filled power transformer comprising a container including a core and a coil arranged around the core, and the transformer comprises a barrier layer according to claim 1-12 which is arranged to insulate the coil.

According to an embodiment of the invention, where in the barrier layer is arranged between the coil and the core to electrically insulate the core from the coil.

According to an embodiment of the invention, where in the barrier layer is arranged between the coil and the container to electrically insulate the container from the coil.

According to an embodiment of the invention, wherein the transformer comprises a second coil arranged around the first coil and the barrier layer is arranged between the coils to electrically insulate the coils from each other.

According to an embodiment of the invention, the use of a barrier layer according to claim 1-12, to electrically insulate one or more coils in a liquid filled power transformer.

The corrugated insulating layers (4) that make up the barrier layer can be made from a number of different fibrous or non-fibrous materials. One commonly used material for insulating layer is cellulose based material such as pressboard or paper.

Synthetic polymer materials are also good materials for the insulating layers, for example, synthetic aromatic polyamide polymer (e.g. NOMEX) or other synthetic polymer materials. Any material that show equal or better temperature resistance and/or electrical breakdown strength than cellulose based materials will make good insulating layers. The synthetic materials have the advantage that they do not adsorb water, making the drying of the transformer easier.

The non-corrugated insulating layer can be made cellulose i.e. paper but synthetic materials are also possible.

The liquid in the liquid filled electrical machine is an electrically insulating liquid, such as a mineral transformer oil with or without additives. The liquid can also be a natural ester oil, such as a vegetable oil or mixtures of vegetable oils, with or without additives. The liquid can also be a natural ester oil that has been chemically modified, with or without additives.

The liquid filled electrical machine can be any type of nonrotating induction machine such a transformer or reactor. A power transformer is a high voltage transformer that transforms voltages above 1 kV. The power transformer can work with voltages up to 1000 kV and even higher.

The corrugated insulating layers are easier to handle during the manufacture of the barrier because they are stiffer than non-corrugate insulating layer. The stiffness of the corrugated insulating layers 4 makes the bending around a coil easier due to that the corrugated layer 4 is less likely to bend or fold during handling compared to using non-corrugate insulating layer, such as paper.

Making a barrier from layers made of corrugated pressboard or NOMEX will save insulating material compared to using spacers and non-corrugated insulating layers.

The ridges and valleys in the corrugated insulating layers remove the need for separate spacers and the possibilities for errors that spacers can introduce. Because there are many more ridges and valleys in a corrugated insulating layer that separate two layers, the separation of the two layers by the corrugated insulating layer is more secure than with spacers.

### BRIEF DESCRIPTION OF THE DRAWINGS

The drawings constitute a part of this specification and include exemplary embodiments to the invention, which may be embodied in various forms.
Figure 1 shows schematically the coils in a transformer with a barrier as can be fund in transformer today.
Figure 2 shows schematically the coils and a barrier.
Figure 3 shows one embodiment of a barrier.
Figure 4 shows one embodiment of a barrier.
Figure 5 shows one embodiment of a barrier in detail.
Figure 6 shows how the angle of ridges and valleys of a cylindrically shaped corrugated insulating layer is extending in a direction that differs from the axial direction.
Figure 7 shows schematically different transformers and possible placements of barrier layer.

### DETAILED DESCRIPTION OF THE DRAWINGS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

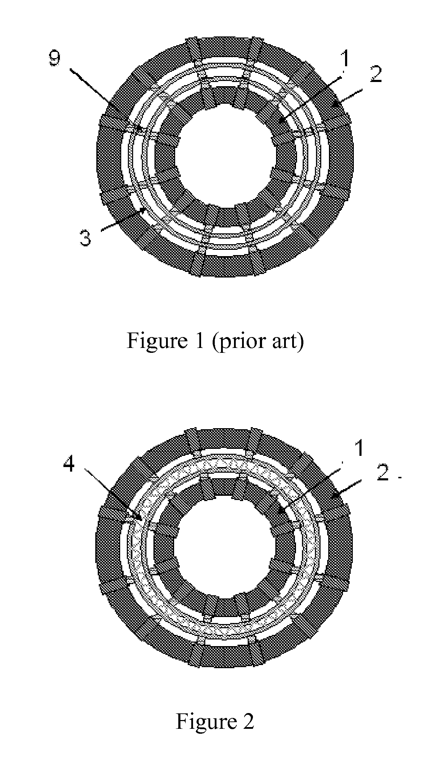

Figure 1 shows schematically the coils 1, 2 in a transformer with a barrier as is known in the art, comprising two flat cellulose layers 3. Spacers 9 ensure that channels are created between the flat cellulose layers 3. The barrier layer can also be arranged without spacers.

Figure 2 shows schematically the coils 1, 2 and a barrier comprising a corrugated insulating layer 4 arranged between the coils. This is only one arrangement; the barrier might be arranged outside of the coils or arranged inside of the coils, i.e. between the coils and an iron core.

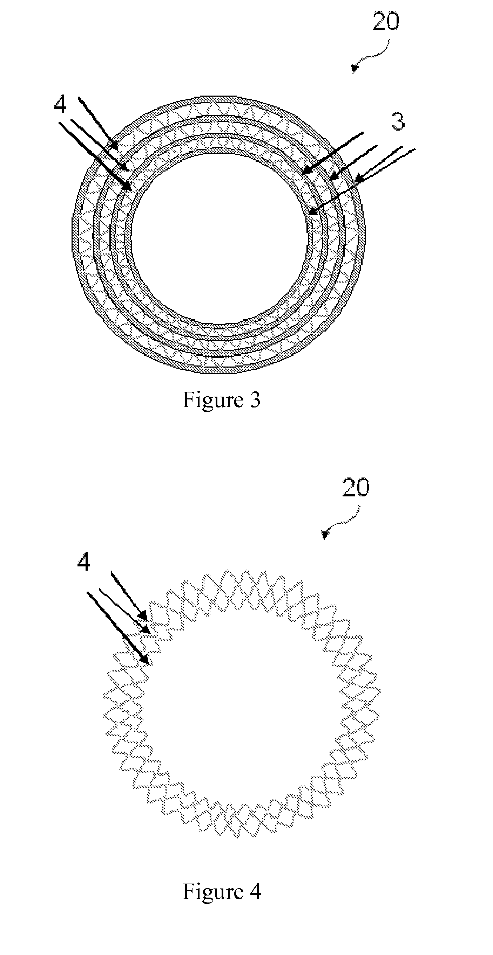

Figure 3 shows one embodiment of a barrier layer 20 with alternately non-corrugated or flat cellulose layers 3 and corrugated insulating layer 4. This barrier might be built by arranging one layer after the other or by combining, e.g. by gluing, the non-corrugated layer with the corrugated layer to take advantage of the easy handling of the stiffer corrugated layer.

Figure 4 shows one embodiment of a barrier layer 20 with only corrugated insulating layers 4. This embodiment is the one that is the easiest to assemble.

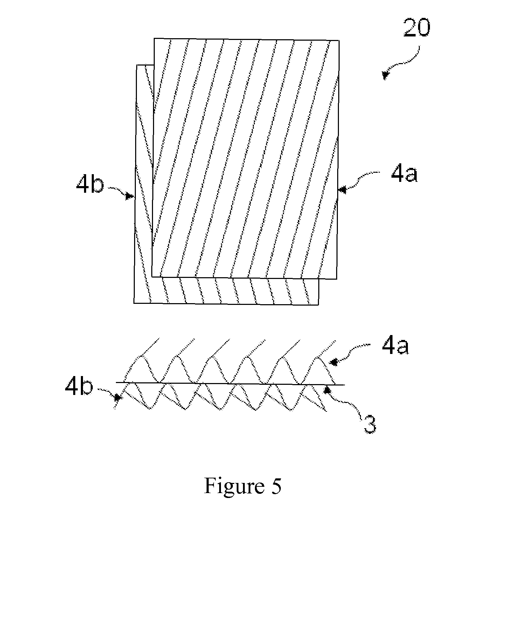

Figure 5 shows one embodiment of a barrier layer 20 in detail where alternate layers of corrugated insulating layer 4a, 4b have ridges and valleys in different directions. The barrier can comprise of only corrugated insulating layer 4 (as in figure 4) or corrugated insulating layer 4 with non-corrugated or flat insulating layer 3 between the corrugated insulating layer 4 (as in figure 3). The layers are originally flat squares and are arranged, one after the other, around the coils forming a cylindrical barrier of several layers. The joint, where the edges of one layer meet, have to be placed on a different position than the underlying layer to prevent to create an electrically weak spot.

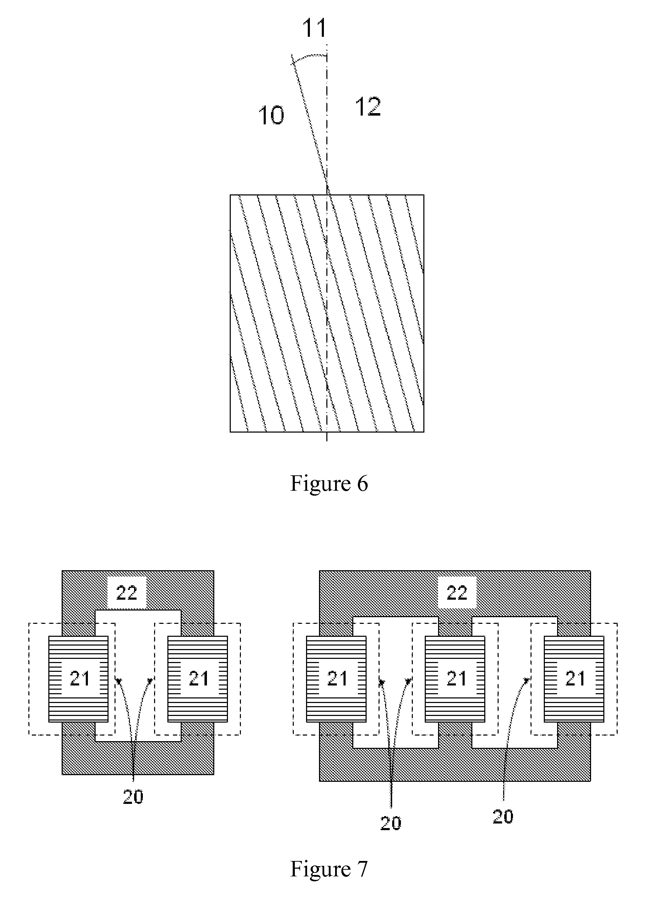

Figure 6 shows how the angle 11 of ridges and valleys 10 of a cylindrically shaped corrugated insulating layer is extending in a direction that differs from the axial direction 12. The axial direction of the cylinder is indicated by dash dot line 12.

The angle 11 should be 2-25 deg, preferable between 5 and 15 deg.

Figure 7 shows schematically different transformers and possible placements of barrier layer 20. The left transformer is a 1-phase transformer and the right is a 3-phase transformer. The transformers comprise a coil/winding 21 wound around an iron core 22. The barrier layer 20 is arranged around the coil 21 to support the insulation of the coil. It is obvious to a man skilled in the art that the placements of barriers in a transformer are not limited to the examples here. Any space in a transformer that is subjected to high electrical stress can be arranged with a barrier layer 20 according to the present invention. The barrier layer is described to be arranged as a cylindrical tube arranged around a coil, but it is clear to the man skilled in the art that the barrier layer in the present invention is not limited to cylindrical tube but can have a plurality of different shapes.

The angle between the first direction and the second direction is 4-40 deg, preferably between 10 deg and 30 deg.

## Claims

1. A barrier layer 20 for a liquid filled electrical machine, the barrier layer comprising a plurality insulating layers, **characterized in that** said barrier layer comprises a first and a second corrugated insulating layer (4, 4a, 4b), the first corrugated insulating layer comprises ridges and valleys extending in a first direction and the second corrugated insulating layer comprises ridges and valleys extending in a second direction which differs from the first direction

2. The barrier layer according to claim 1, wherein said first and second corrugated insulating layers are cylindrically shaped and arranged coaxially.

3. The barrier layer according to claim 2, wherein the angle (11) between each of the first and the second direction and an axial direction of the cylindrically shaped layers is between 2 and 25 deg.

4. The barrier layer according to claim 3, wherein the absolute value of angle (11) between the first direction and the axial direction is equal to the angle between the second direction and the axial direction.

5. The barrier layer according to claims 1-4, wherein a non-corrugated insulating sheet (3) is arranged between the first and second corrugated insulating layer (4).

6. The barrier layer according to claims 1-5, wherein the angle between the first and second direction is between 4 deg and 50 deg.

7. The barrier layer according to any previous claim, wherein the first and second corrugated insulating layers (4) are made from synthetic polymer materials.

8. The barrier layer according to any of the claims 1-6, wherein the first and second corrugated insulating layers (4) comprises fibrous synthetic polymer material.

9. The barrier layer according to any of the claims 1-6, wherein the first and second corrugated insulating layers (4) comprises synthetic aromatic polyamide polymer or NOMEX.

10. The barrier layer according to claims 1-6, wherein the first and second corrugated insulating layer (4) are made from pressboard.

11. The barrier layer according to any previous claim, wherein ridges and valleys of the first layer are in contact with a neighboring insulating layer (4, 3).

12. The barrier layer according to claim 9, wherein ridges and valleys of the first layer are in contact with a non-corrugated insulating layer (3).

13. The barrier layer according to claim 9, wherein ridges and valleys of the first layer are in contact with ridges and valleys of the second layer (4).

14. A liquid filled power transformer comprising a container including a core (22) and a coil (21) arranged around the core,
**characterized in that** the transformer comprises a barrier layer (20) according to claim 1-13 which is arranged to insulate the coil.

15. The liquid filled power transformer according to claim 14, where in the barrier layer is arranged between the coil and the core to electrically insulate the core from the coil.

16. The liquid filled power transformer according to claim 14, where in the barrier layer is arranged between the coil and the container to electrically insulate the container from the coil.

17. The liquid filled power transformer according to claim 14, wherein the transformer comprises a second coil arranged around the first coil and the barrier layer is arranged between the coils to electrically insulate the coils from each other.
